(19) Europäisches Patentamt
European Patent Office
Office européen des brevets

(11) **EP 1 845 703 A1**

(12) **EUROPEAN PATENT APPLICATION**

(43) Date of publication:
**17.10.2007 Bulletin 2007/42**

(51) Int Cl.:
**H04N 1/60** (2006.01)     **H04N 9/64** (2006.01)
**H04N 17/00** (2006.01)

(21) Application number: **06290608.6**

(22) Date of filing: **12.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing**
**92100 Boulogne-Billancourt (FR)**

(72) Inventors:
• **Stauder, Jurgen**
**35440 Montreuil sur Ille (FR)**
• **Thollot, Julien**
**35830 - Betton (FR)**
• **Colantoni, Philippe**
**42000 - Saint Etienne (FR)**
• **Tremeau, Alain**
**42000 - Saint Etienne (FR)**

(74) Representative: **Kohrs, Martin et al**
**Thomson,**
**46, quai Alphonse Le Gallo**
**92648 Boulogne Cedex (FR)**

(54) **Device, system and method for characterizing a colour device**

(57)     A method for characterising a colour device (401). A first transform (305) is calculated (304) from first input colours (302) and first output colours (303) measured (301) by an optical instrument (403). An intermediate set of output colour values (306) is obtained and transformed (307), using the transform (305), into a second set of input colour values (308), which are used to obtain (309) a second set of output colour values (310). The second sets of input and output colour values (308, 310) are used to calculate (311) a second transform (312). By a judicious choice of intermediate output colour values, e.g. in the Lab colour space, it is possible to obtain a transform that is extra accurate for colours for which the eye is especially sensible. Also provided are a system and a device.

Figure 3

**Description**

FIELD OF THE INVENTION

The invention relates to a method and a device for characterizing a colour device. In connection with the present invention, "colour device" means any kind of image output device, e.g. a film projector, a digital projector, a CRT monitor, a Digital Video Disc (DVD) storage device with linked monitor or a video cassette storage device with linked monitor, or any kind of image capturing device, e.g. a film camera in combination with a film scanner, an electronic camera.

BACKGROUND OF THE INVENTION

Today in TV and film production digitally generated special effects are frequently used. Already since long in film production almost all processing steps -commonly summarized under the term "post-production"- involve digital technologies such as colour management or colour keying to name only two examples. The importance of digital technologies is still growing, driven by the emergence of digital scanners, digital cameras, new digital display devices like plasma and Liquid Crystal Display (LCD) screens and new digital media such as hard disk drives.
A person skilled in the art will be aware of many other devices utilized during post-production of film material. In the following such devices are referred to as digital studio equipment in general.

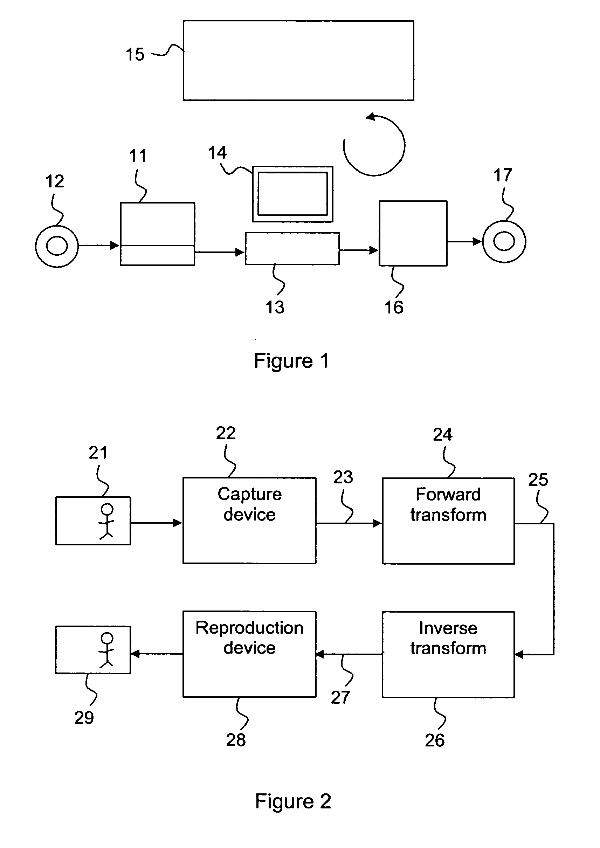

Fig. 1 schematically illustrates a typical situation during post-production of a film by symbolizing the workflow in a post-production studio. Since the processing work is based on the application of digital technologies Fig. 1 shows a "digital workflow".
Digital equipment influences cinematographic workflows in many ways. In the studio of Fig. 1, a telecine or scanner 11 converts a negative film 12 into electrical video signals which are processed by a colourist with a colour correction device 13. The colourist monitors his work by watching the result of his interventions on a screen 14 connected to the colour correction device. At the same time the image can be projected onto a large screen 15 of a cinema inside the post-production studio. Only when the result of the processed video data is satisfactory are the video data transferred to negative film printer 16 to make corrected negative and positive film 17.
In Fig. 1, the post-production process is exemplified only by colour correction even though a real post-production process involves many more processing steps e.g. the introduction of digital effects. However, all digital post-production steps follow the principle that the effects and corrections are applied to electronic video signals. The results are simultaneously controlled by displaying the electronic video signals. Only after the termination of the post-production process is a chemical film printed again. While domains such as computer graphics, video compression, transmission, and colour science are concerned as well, the present invention focuses on colour imaging aspects in processing of cinematographic content.
Colour is an important artistic element in film creation. Digital equipment completely changes the habits during capture and post-processing. Digital technologies bring new features but also represent a danger for artistic experience and heritage. It is thus necessary to understand and describe the analogue cinematographic image chain to transfer known artistic effects from conventional cinematographic post processing into digital cinema post-processing. This requires the management of colours both in analogue and digital devices.
Colour is an important topic when storing, copying and multiplying content using various formats. Since the introduction of digital cinema will take a long time as large investments have to be made, analogue and digital equipment will co-exist during this time. Cinematographic workflows include multiple transfers from film to digital representations and vice versa. In all these transformations of content, colour should preferably be preserved as far as possible.
Colours are among the most important aspects of a film. Therefore, mastering cinematographic colour correction opens high-quality and emotional content to different types of audiences while keeping artistic and emotional intent. However, the more complex and heterogeneous the imaging chain is, the more difficult is it to keep colour reproduction coherent. Imaging chains may include carrying processing workflows employing different types of equipment and media. The explicit consideration of different device types and media in order to ensure correct colour reproduction is called colour managing.
Colour management needs to be applied to the whole content chain: capture devices, post-processing devices, copying devices and display devices have to be mastered to ensure colour coherence.
Colour is also important when cinematographic content is distributed via multiple channels such as analogue film projection, digital film projection, television, streaming, DVD, videocassette, mobile devices. The content chain also includes distribution to consumer displays of end users.
Colour devices also include varying media such as paper for colour prints, film for film projection or digital media (for example DVD) for monitor display. In this sense, a colour device may include several physical devices such as a DVD recorder and a connected monitor. The problem of colour management is that the colour output or input values for capturing devices or reproduction devices, respectively, are device dependent. A device dependent colour space can be a Red Green Blue (RGB) colour space. This means that the same colour values may be related to different colours when used with two different devices, because the colour spaces associated with the respective devices are not identical.

As a consequence, it is necessary to transform the colours of a specific image from one colour space to another one when the image moves along the post-production workflow from one colour device to the next. The transformation of colour values from one colour space to another is usually non-linear. In the following, this will be explained in more detail for the example of video and film colour spaces.

A necessary prerequisite for colour value transformation is to quantify, i.e. to measure colour values. The physiological colour impression of an observer is determined by the spectrum of the light entering into the observer's eye and the subsequent visual processing of the human brain. The human eye has three types of receptors. Thus, it is possible under constrained viewing conditions to define a specific colour by a set of three values, which are called CIE tristimuli XYZ. The tristimuli have already been defined in 1931 by the CIE (Commission Internationale de l'Eclairage).

The tristimuli for a specific colour are calculated from the spectrum $S(\lambda)$ of the colour by integration with weighting functions:

$$X \; = \; \int S(\lambda) x(\lambda) d\lambda \qquad\qquad (1)$$

$$Y \; = \; \int S(\lambda) y(\lambda) d\lambda \qquad\qquad (2)$$

$$Z \; = \; \int S(\lambda) z(\lambda) d\lambda \qquad\qquad (3)$$

The tristimuli XYZ are still objective values even if weighted by weighting functions related to the human eye. Numerous measuring instruments such as photometers or video-photometers use XYZ tristimuli to give objective measures of colours.

Often more subjective criteria are needed to ensure the correct reproduction. Colour coordinates are needed that better reflect human colour perception than XYZ tristimuli. For example, XYZ tristimuli are not perceptually uniform. When a human observer compares a colour A with a colour B and also the colour B with a colour C, when colours A, B, and C have tristimulus values Xa,Ya,Za,Xb,Yb,Zb,Xc,Yc,Zc, respectively, when the Euclidean distance between tristimulus values of A and B as well as of B and C are equal, than the perceived colour distance between A and B is generally not the same as the distance perceived between B and C. The Euclidean distance is the square root of the sum of squared distances between tristimulus values.

For this purpose, new colour spaces have been founded. One of these colour spaces is the CIE 1976 (L*a*b*) colour space. The three values L*, a*, b* can be calculated from XYZ tristimulus values and vice versa.

Anyway, XYZ tristimulus values and other colour coordinates based upon such as L*a*b* are device independent.

Contrary to this device independency, the output colour space of a CRT display is determined by the emitted light of the red, green and blue phosphors. Other colours are generated by additive mixture of the three basic colours. Obviously this colour space is device dependent.

In film, colours are generated by partial absorption of white light in red, green and blue colour layers contained in the film. Due to the different principle of colour generation - absorption instead of emission - generation of intermediate colours is ruled by multiplicative colour mixing. Again, the resulting colour space is device dependent and it is different from the colour space of the CRT display described above.

In practice, the transformation of colour values from one device dependent colour space to another device dependent colour space includes an intermediate step. The intermediate step is to transform a device dependent colour space first into a device independent colour space. The intermediate step is a specific colour transformation called device model. A device model is established by colour characterization.

Colour characterization consists of the establishment of a colour transformation between device dependent colour values and device independent colour values. This transformation is usually calculated from measurements of device dependent and device independent colour values. For a reproduction device this procedure is as follows: A set of device dependent colour values are fed into the device and the reproduced colours are measured by an objective, optical measurement instrument giving a set of corresponding device independent colour values. The device independent colour values can be XYZ or L*a*b*.

Figure 2 shows an imaging chain calibrated such that reproduced colours are close or identical to captured colours. The calibration is carried out by a forward transform resulting from capture device characterization and an inverse transform resulting from reproduction device characterization.

Figure 2 schematically shows a calibrated imaging chain. An image 21 is captured by a capture device 22, e.g. a scanner, that provides device dependent output colour values RGB 23. A forward transform 24 associated with the capture device 22 transforms the device dependent output colour values RGB 23 into device independent colour values XYZ 25. An inverse transform 26 associated with a reproduction device 28 transforms the device independent colour values XYZ 25 into device dependent input colour values R'B'G' 27 for the reproduction device 28. As a result the displayed image 29 is identical or almost identical with the captured image 21, or at least appears so to a human observer.

One main problem of device characterization is the high number of measurements necessary to establish a colour transform with acceptable precision. Since for practical reasons the number of measurements is limited, the problem becomes how to choose the limited number of measurements.

When for example measuring a display device, a limited number of RGB input colours to be measured have to be selected. In an EPFL research report from 2002 of D. Alleysson and S. Susstrunk entitled "Caractérisation couleur dans la chaîne cinématographique numérique : Projection et visualisation" (in English: Colour Characterization of the digital cinema chain), the authors propose to choose values for (R,G,B) of the type (n,0,0), (0,n,0), (0,0,n), (n,n,0), (n,0,n) and (0,n,n) with values for n between 0 and 255 in steps of 15 or 30.

This invention improves upon the prior art in that it provides a method and device for characterizing a colour device so that the perceived quality of the transform is improved or, alternatively, a quicker transform with a low perceived loss of quality is obtained.

## SUMMARY OF THE INVENTION

In a first aspect, the invention is directed to a method for characterizing a colour device. An intermediate set of output colour values is transformed into a second set of input colour values according to a first transformation rule. The first transformation rule is determined from a first set of input colour values and a first set of output colour values responsive in the colour device to the first set of input colour values, and transforms the first set of input colour values into the first set of output colour values. A second set of output colour values of the colour device is obtained, wherein the second set of output colour values are responsive to the second set of input colour values. Then a second transformation rule is determined from the second set of input colour values and the second set of output colour values.

In a preferred embodiment, the method also determines the first transformation rule from the first set of input colour values and the first set of output colour values responsive in the colour device to the first set of input colour values. It is advantageous that for determining the first transformation rule, the colour device is provided with the first set of input colour values and the first set of output colour values of the colour device is obtained; the first set of output colour values being responsive to the first set of input colour values.

In another preferred embodiment, the steps are iterated at least once and, for each iteration, the first transformation rule for the iteration equals the second transformation rule of the preceding iteration.

In a further preferred embodiment, the second transformation rule is determined from the first and second sets of input colours and the first and second sets of output colours.

In yet another preferred embodiment, the intermediate set of output colours comprises at least one of a number of regularly sampled colours, a number of output colours that correspond to regularly sampled input colour values, and a number of colour samples being important for an application case. This may for example relate to memory colours such as human skin tones or blue sky.

In a second aspect, the invention is directed to a system for characterizing a colour device. The system comprises a processor adapted to transform an intermediate set of output colour values into a second set of input colour values according to a first transformation rule, and means to obtain a second set of output colour values of the colour device, wherein the output colour values are responsive to the second set of input colour values. The processor is further adapted to determine a second transformation rule from the second set of input colour values and the second set of output colour values.

In a preferred embodiment, the processor is further adapted to determine the first transformation rule from a first set of input colour values and a first set of output colour values. It is advantageous that the obtaining means is an optical instrument adapted to measure the first set of output colour values of the colour device, wherein the output colour values are responsive to the first set of input colour values.

In a further preferred embodiment, the processor is further adapted to use also the first input colour values and the first output colour values to determine the second transformation rule.

In yet another preferred embodiment, the colour device is a reproduction device, the sets of input colour values are device dependent, and the sets of output colour values are device independent.

In yet a further preferred embodiment, the colour device is a capturing device, the sets of input colour values are device independent, and the sets of output colour values are device dependent.

In another preferred embodiment, the first set of input colour values comprises at least one of either a number of regularly sampled colour values and a number of colour samples being important for an application case.

In yet another preferred embodiment, the intermediate set of output colours comprises at least one of a number of regularly sampled colours, a number of output colours that correspond to regularly sampled input colour values, and a number of colour samples being important for an application case. This may for example relate to memory colours such as human skin tones or blue sky.

In another preferred embodiment, the processor, when it determines the second transformation rule, is further adapted not to consider input or output colours if they are closer than a given distance threshold to any other used colour.

In a third aspect, the invention is directed to a device for characterizing a colour device. The device comprises a processor adapted to transform an intermediate set of output colour values into a second set of input colour values according to a first transformation rule, and determine a second transformation rule from the second set of input colour values and a second set of output colour values; wherein the second set of output colour values are responsive to the second set of input colour values.

In a preferred embodiment, the processor is further adapted to determine the first transformation rule from a first set of input colour values and a first set of output colour values.

In another preferred embodiment, the processor is further adapted to use also the first input colour values and the first output colour values to determine the second transformation rule.

In yet a further preferred embodiment, the processor, when it determines the second transformation rule, is further adapted not to consider input or output colours if they are closer than a given distance threshold to any other used colour.

BRIEF DESCRIPTION OF THE DRAWINGS

Figure 1, already described, illustrates an exemplary post-production process using colour correction according to the prior art;

Figure 2, already described, illustrates an exemplary calibrated imaging chain according to the prior art;

Figure 3 illustrates a method for characterisation according to the invention;

Figure 4 illustrates a system according to the invention for characterising a colour device;

Figure 5 illustrates a sampling scheme in two dimensions; and

Figure 6 illustrates sampling in three dimensions.

DETAILED DESCRIPTION OF PREFERRED EMBODIMENTS

While the invention relates to characterisation of a colour device in general, the preferred embodiment is a solution for an image display device where the intermediate set of output colour values is chosen in L*a*b* space. The person skilled in the art will appreciate that any other colour space may be used.

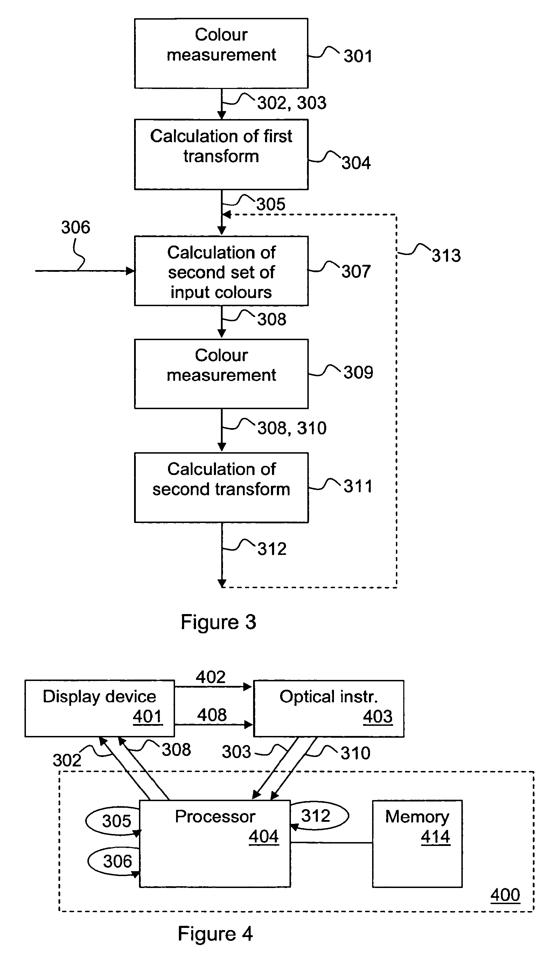

Figure 3 illustrates a characterisation method according to the invention. In the exemplary description, the input colour values each consist of a triplet of R (red), G (green) and B (blue) components. The output values consist each of a triplet of X, Y and Z components.

The method described allows establishing an RGB to XYZ colour transform as well as a XYZ to RGB colour transform. The example shown is the establishment of an XYZ to RGB colour transform, but the skilled person will appreciate that a transformation between virtually any combination of colour spaces is possible.

In a first step 301, a first set of RGB and corresponding XYZ colour values are measured. A set of device dependent RGB colour values 302 is chosen and fed into the display device 401, preferably by a processor 404 in a device 400 for characterising the display device 401. Typically, the RGB colour values 302 are chosen on a regular grid. Then the reproduced colours 402 are measured by an optical instrument 403 giving a set of corresponding device independent XYZ colour values 303. Since this procedure needs time (controlling of RGB values, measurement time, data processing time, eventually manual interactions), the number of colour values is limited. By this procedure a set of colour values $C_i^{RGB}$, $C_i^{XYZ}$ $\forall$ $1 \le i < I$ _302,_ 303 (I being the number of measures) are measured with $C^{RGB}$

$= (R,G,B)^T$ and $C^{XYZ} = (X,Y,Z)^T$. The device 400 and the optical instrument 403 may together form a system for characterising a colour device.

The processor 404 then establishes 304 a first colour transform 305 from the device dependent colour values 302 and the measured colour values 303. As an example, a transform based on thin plate spline interpolation is described. Thin plate spline is a physically based 3D interpolation scheme for arbitrarily spaced tabulated data. These splines are a generalization of the natural cubic splines in 1D.

Then, an intermediate set of output colours 306 is chosen in the L*a*b* space, preferably by the processor 404. The L*a*b* space is more homogeneous with respect to human vision and, for example, regular sampling generates colour that better covers the colours visible by the human eye. The L*a*b* space is visually more homogeneous than XYZ or RGB colour spaces.

This intermediate set of output colours 306 and the first colour transform 305 are used as input when the processor 404 calculates 307 a second set of RGB input colour values 308.

The link between L*a*b* and RGB values is preferably established as follows. First, L*a*b* values are transformed into XYZ values using the inverse transform of standardized transform CIE XYZ to CIE 1976 (L*a*b*). Then, XYZ values are transformed into the second set of RGB input colour values using the first colour transform.

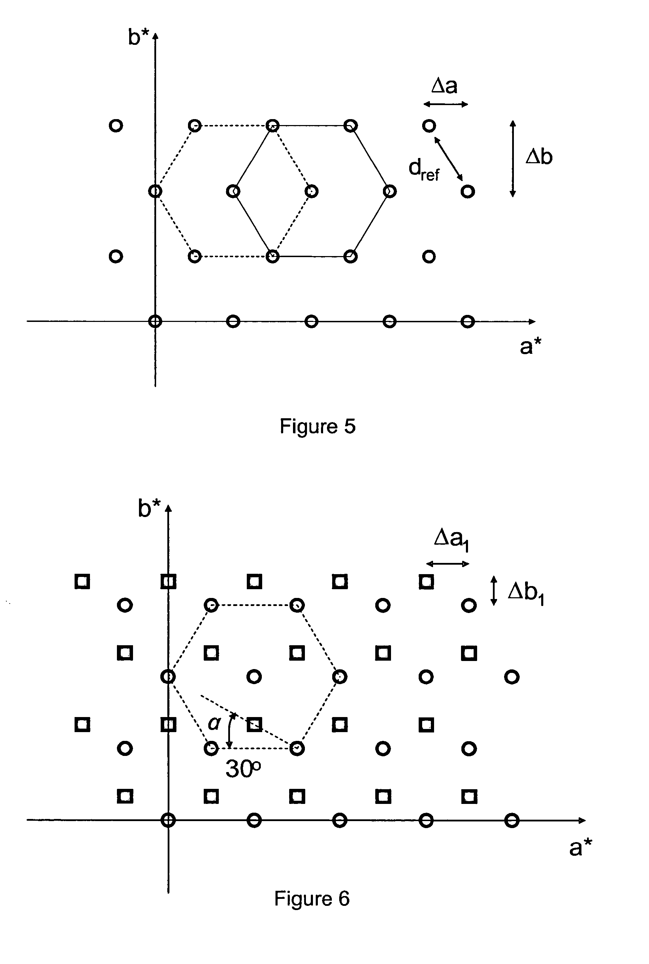

A preferred method of choosing the intermediate set of output colours in L*a*b* space is illustrated in Figures 5 and 6.

Figure 5 illustrates a regular sampling scheme in two dimensions. The colours are distributed on a hexagonal grid in the a*b* plane of L*a*b* space. The distance between neighbouring colour samples is constant and equals $d_{ref}$. This is ensured as follows. Regarding a line in a* direction with constant b*, the distance between neighbouring colours is set to $d_{ref}$. Two neighbouring lines are shifted in a* direction by $\Delta a$ and in b* direction by $\Delta b$. To ensure equal distance between neighbouring colour samples, the condition

$$\Delta a^2 + \Delta b^2 \overset{!}{=} d_{ref}^2 \qquad (4)$$

has to be fulfilled (the exclamation mark indicating that the left-hand side should be equal to the right-hand side). When

$$\Delta a = d_{ref}/2 \qquad (5)$$

is chosen, it follows that

$$\Delta b = (\sqrt{3}/2)d_{ref} \qquad (6)$$

satisfies the condition and a hexagonal grid is constructed.

Regular sampling in L*a*b* space has the advantage that perceived colour distances are more constant than in other colour spaces. This ideally means that if any two colours have a certain distance in L*a*b* space and any two second colours have the same distance in L*a*b* space, then a human perceives the same distance between the first two and between the second two colours.

To extend this sampling scheme into 3D colour space, several equidistant a*b* planes are constructed. Figure 6 illustrates sampling in three dimensions exemplified by sampling in two a*b* planes at luminance level L* (indicated by circles in Fig. 6) and L*+$\Delta L_1$ (indicated by squares in Fig. 6).

The 2D sampling in the second plane follows the same principle as the sampling in the first plane, but the sampling schemes are shifted in a* direction by $\Delta a_1$ and in b* direction by $\Delta b_1$.

In order to satisfy the requirements of equidistant sampling, the condition

$$\Delta L_1^2 + \Delta a_1^2 + \Delta b_1^2 \overset{!}{=} d_{ref}^2 \qquad (7)$$

has to be fulfilled. First, the shift in a* direction is chosen such that

$$\Delta a_1 = d_{ref} / 2 \qquad (8)$$

The shift in b* direction is chosen such that the angle α shown in Figure 6 is 30 degrees, giving the condition

$$\Delta b_1 / \Delta a_1 = \tan 30^o = 1/\sqrt{3} \quad (9)$$

It follows that

$$\Delta b_1 = \frac{1}{2\sqrt{3}} d_{ref} \qquad (10)$$

Inserting these results into the mentioned condition

$$\Delta L_1^2 + \Delta a_1^2 + \Delta b_1^2 \overset{!}{=} d_{ref}^2 \quad \text{gives} \quad \Delta L_1 = \sqrt{\frac{2}{3}} d_{ref} \qquad (11)$$

In a preferred embodiment, additional colour samples may be defined to be used for verification of the transform, while the colour samples defined using the method illustrated with reference to Figures 5 and 6 are to be used for further device measurement and characterisation. These colour samples for verification may be positioned in a third a*b* plane at luminance level $L^*+\Delta L_2$, in-between the levels $L^*$ and $L^*+\Delta L_1$. Furthermore, a shift in a* direction and b* direction is necessary to ensure that all closest neighbours of an additional colour sample are equidistant.

In another preferred embodiment, an additional set of RGB values is added to the second set of RGB input colour values. These additional values can be of two kinds. First, they can be regularly sampled RGB values, notably on the surface of the RGB cube in order to limit the effect of errors in the first colour transform. Second, the additional colour values can be values of specific importance for a specific application. For example, when focusing on dark images, small RGB values could be added. However, it can be useful to test for and eliminate colour samples that are too close one to each other. This distance test can be executed in device dependent (RGB) or device independent colour space (XYZ, L*a*b*).

Referring again to Figures 3 and 4, a second set of XYZ output colour values 310 for the reproduced colour values 408 corresponding to the second set of input colours 308 is then measured 309. Since it is generated by regular L*a*b* sampling, the second set of colours is usually smaller than the first set of colours. This step is then less time consuming than the first colour measurement step 301.

A final colour transform 312 is established 311 from the second set of colour values 308 and 310. As an example, a transform based on thin plate spline interpolation can be used. It is possible to take into account also the first input colour values and the first output colour values when establishing the final colour transform.

It may be preferable not to consider input or output colours if they are closer than a given distance threshold - according to a given distance measure - to any other used colour when determining the final transformation rule. This prevents colours from being too close one to one another.

Colours that are too close may be the result of an irregularity of the sampling of the colour space and may cause problems for any model fitting or interpolation method used to build a colour transform.

In another preferred embodiment, as indicated by arrow 313, steps 307, 309 and 311 are repeated at least once with a new intermediate set of output colours 306. When step 307 is repeated, the final colour transform 312 is input instead of the first colour transform 305. When step 311 is repeated, a new final colour transform 312 is calculated, replacing the former final colour transform. Such iteration can increase the precision of the final colour transform since the second set of RGB input colour values corresponds to the chosen intermediate set of output colour values with better precision.

In the description hereinbefore, the device to characterise was a reproduction device, but it should be noted that it is also possible to characterise a capturing device. In this case, instead of measuring the output colour values with an optical instrument, these are obtained directly as output signals of the colour device, while the optical instrument may measure the input colour values. One way to obtain input colour values is to use a calibrated printing device and its device profile. Using the device profile, printing device input values are calculated from the second set of output colour values. Using these printing device input values, the printing device will generate output colours on a physical medium that may be used as input colours for the capturing device.

When using the method according to the invention, the set of output colours 306 may be chosen intelligently. It is for example possible to provide many output colours (i.e. a "dense" sampling) where a human eye is sensitive and less where it is not so sensitive, providing a higher perceived quality of the transform. Another possibility is to reduce the number of output colours where the eye is less sensitive, enabling a quicker transform with a much lower perceived loss of quality than if one blindly reduces the number of values.

It will thus be appreciated that the invention provides an improved method, device, and system for characterizing a colour device.

It will be appreciated that the processor 404 communicates as necessary with memory 414, that the tasks of processor 404 may be shared by a plurality of physically separate processors, and that a separate optical instrument may be used for each measurement. The skilled person will also appreciate that other modifications are possible without departing from the spirit of the invention.

## Claims

1. A method for characterizing a colour device (401), the method comprising the steps of:

   - transforming (307) an intermediate set of output colour values (306) into a second set of input colour values (308) according to a first transformation rule (305), the first transformation rule (305) being determined from a first set of input colour values (302) and a first set of output colour values (303) responsive in the colour device (401) to the first set of input colour values (302), the first transformation rule (305) being adapted to transform the first set of input colour values (302) into the first set of output colour values (303),
   - obtaining (309) a second set of output colour values (310) of the colour device (401), wherein the second set of output colour values (310) are responsive to the second set of input colour values (308), and
   - determining (311) a second transformation rule (312) from the second set of input colour values (308) and the second set of output colour values (310).

2. The method of claim 1, further comprising the step of determining (301, 304) the first transformation rule (305) from the first set of input colour values (302) and the first set of output colour values (303) responsive in the colour device (401) to the first set of input colour values (302).

3. The method of claim 2, wherein the step of determining (301, 304) the first transformation rule comprises the steps of:

   - providing (301) the colour device (401) with the first set of input colour values (302), and
   - obtaining (301) the first set of output colour values (303) of the colour device (401), wherein the first set of output colour values (303) are responsive to the first set of input colour values (302).

4. The method of claim 1, wherein the steps are iterated at least once and, for each iteration, the first transformation rule (305) for the iteration equals the second transformation rule (312) of the preceding iteration.

5. The method of claim 1, wherein the second transformation rule (312) is determined from the first set of input colours (302), the second set of input colours (303), the first set of output colours (308), and the second set of output colours (310).

6. The method of to claim 1, wherein the intermediate set of output colours (306) comprises at least one of: a number of regularly sampled colours, a number of output colours that correspond to regularly sampled input colour values, and a number of colour samples being important for an application case.

7. A system (400; 403) for characterizing a colour device (401), the system (400; 403) comprising:

   - a processor (404) adapted to transform an intermediate set of output colour values (306) into a second set of input colour values (308) according to a first transformation rule (305),
   - means (403) to obtain a second set of output colour values (310) of the colour device (401), wherein the second set of output colour values (310) is responsive to the second set of input colour values (308),

wherein the processor (404) is further adapted to determine a second transformation rule (312) from the second set of input colour values (308) and the second set of output colour values (310).

8. The system of claim 7, wherein the processor (404) is further adapted to determine the first transformation rule (305) from a first set of input colour values (302) and a first set of output colour values (303).

9. The system of claim 8, wherein the obtaining means (403) is an optical instrument further adapted to measure the first set of output colour values (303) of the colour device (401), wherein the output colour values (303) are responsive to the first set of input colour values (302).

10. The system of claim 7, wherein the processor (404) is further adapted to use also the first input colour values (302) and the first output colour values (303) to determine the second transformation rule (305).

11. The system of claim 7, wherein the colour device (401) is a reproduction device, the sets of input colour values (302, 308) are device dependent, and the sets of output colour values (303, 310) are device independent.

12. The system of claim 7, wherein the colour device (401) is a capturing device, the sets of input colour values (302, 308) are device independent, and the sets of output colour values (303, 310) are device dependent.

13. The system of claim 7, wherein the first set of input colour values (302) comprises at least one of: a number of regularly sampled colour values and a number of colour samples being important for an application case.

14. The system of claim 7, wherein the intermediate set of output colours (306) comprises at least one of: a number of regularly sampled colours, a number of output colours that correspond to regularly sampled input colour values, and a number of colour samples being important for an application case.

15. The system of claim 7, wherein the processor (404), when determining the second transformation rule (312), is further adapted not to consider input or output colours if they are closer than a given distance threshold to any other used colour.

16. Device (400) for characterizing a colour device (401), the device (400) comprising a processor (404) adapted to:

   - transform an intermediate set of output colour values (306) into a second set of input colour values (308) according to a first transformation rule (305), and
   - determine a second transformation rule (312) from the second set of input colour values (308) and a second set of output colour values (310),

wherein the second set of output colour values (310) are responsive to the second set of input colour values (308).

17. The device of claim 16, wherein the processor (404) is further adapted to determine the first transformation rule (305) from a first set of input colour values (302) and a first set of output colour values (303).

18. The device of claim 16, wherein the processor (404) is further adapted to use also the first input colour values (302) and the first output colour values (303) to determine the second transformation rule (312).

19. The device of claim 18, wherein the processor (404), when determining the second transformation rule (312), is further adapted not to consider input or output colours if they are closer than a given distance threshold to any other used colour.

Figure 1

Figure 2

```
┌─────────────────┐
│     Colour      │
│   measurement   │ ⟩ 301
└─────────────────┘
         │
         ↓ ⟩ 302, 303
┌─────────────────┐
│ Calculation of  │
│ first           │ ⟩ 304
│ transform       │
└─────────────────┘
         │
         ↓ ⟩ 305
306                              ┆
  ⟩      ┌─────────────────┐     ┆ ⟩ 313
    ───→ │ Calculation of  │     ┆
         │ second set of   │ ⟩307┆
         │ input colours   │     ┆
         └─────────────────┘     ┆
                  │              ┆
                  ↓ ⟩ 308        ┆
         ┌─────────────────┐     ┆
         │     Colour      │     ┆
         │   measurement   │ ⟩309┆
         └─────────────────┘     ┆
                  │              ┆
                  ↓ ⟩ 308, 310   ┆
         ┌─────────────────┐     ┆
         │ Calculation of  │     ┆
         │ second transform│ ⟩311 ┆
         └─────────────────┘     ┆
                  │              ┆
                  ↓ ⟩ 312        ┆
                  └──────────────┘
```

Figure 3

```
┌──────────────────┐   402    ┌──────────────────┐
│  Display device  │ ───────→ │  Optical instr.  │
│       401        │   408    │       403        │
└──────────────────┘ ───────→ └──────────────────┘
      ↑↓   ↑  ⟩ 308          303 ⟩    ⟩ 310
   302⟩   ⟩                    ╲    ╱
┄┄┄┄┄┄┄┄┄┄┄┄┄┄┄┄┄┄┄┄┄┄┄┄┄┄┄┄┄┄┄┄┄┄┄┄┄┄┄┄┄┄┄┄┄┄
┆        │    │      ┌───────────┐      ↓  ↓              ┆
┆  ⎛ 305 ⎞→   │      │ Processor │   ⎛ 312 ⎞  ┌─────────┐ ┆
┆  ⎝     ⎠    │      │    404    │   ⎝     ⎠  │ Memory  │ ┆
┆  ⎛ 306 ⎞→   │      │           │ ←──────────│   414   │ ┆
┆  ⎝     ⎠    └──────└───────────┘            └─────────┘ ┆
┆                                                  400    ┆
┄┄┄┄┄┄┄┄┄┄┄┄┄┄┄┄┄┄┄┄┄┄┄┄┄┄┄┄┄┄┄┄┄┄┄┄┄┄┄┄┄┄┄┄┄┄
```

Figure 4

Figure 5

Figure 6

**European Patent Office**

# EUROPEAN SEARCH REPORT

**Application Number**

EP 06 29 0608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 323 969 B1 (SHIMIZU MASAYOSHI ET AL) 27 November 2001 (2001-11-27) <br> * abstract * <br> * column 1, line 14 - line 19 * <br> * column 5, line 46 - line 52 * <br> * column 15, line 51 - column 16, line 43 * <br> * column 16, line 1 - line 17 * <br> * column 16, line 26 - line 43 * <br> * column 26, line 53 - column 27, line 42 * <br> * column 31, line 14 - line 22 * <br> * figures 7,10 * | 1-19 | INV. <br> H04N1/60 <br><br> ADD. <br> H04N9/64 <br> H04N17/00 |
| X | US 5 809 213 A (BHATTACHARJYA ET AL) 15 September 1998 (1998-09-15) <br> * abstract * <br> * column 3, line 28 - column 4, line 39 * <br> * column 5, line 12 - line 16 * <br> * column 6, line 5 - line 8 * <br> * column 9, line 42 - column 11, line 17 * <br> * claim 1 * <br> * figures 2a,3,4 * | 1,7,16 | |
| X | US 6 023 351 A (NEWMAN ET AL) 8 February 2000 (2000-02-08) <br> * abstract * <br> * column 2, line 1 - line 36 * <br> * column 5, line 25 - line 56 * <br> * column 10, line 62 - column 11, line 7 * <br> * claim 1 * <br> * figures 3-7 * | 1,7,16 | **TECHNICAL FIELDS SEARCHED** (IPC) <br><br> H04N <br> G09G |
| A | EP 0 676 892 A (XEROX CORPORATION) 11 October 1995 (1995-10-11) <br> * abstract * <br> * claim 1 * | 1-19 | |

The present search report has been drawn up for all claims

| Place of search | Date of completion of the search | Examiner |
|---|---|---|
| The Hague | 8 September 2006 | Bouffier, Alexandre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 06 29 0608

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2006

| Patent document cited in search report | | Publication date | Patent family member(s) | | Publication date |
|---|---|---|---|---|---|
| US 6323969 | B1 | 27-11-2001 | JP | 11055536 A | 26-02-1999 |
| US 5809213 | A | 15-09-1998 | JP | 10028231 A | 27-01-1998 |
| US 6023351 | A | 08-02-2000 | JP | 2000188697 A | 04-07-2000 |
| EP 0676892 | A | 11-10-1995 | DE | 69515071 D1 | 23-03-2000 |
| | | | DE | 69515071 T2 | 13-07-2000 |
| | | | JP | 7307872 A | 21-11-1995 |
| | | | US | 5471324 A | 28-11-1995 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **D. ALLEYSSON ; S. SUSSTRUNK.** Caractérisation couleur dans la chaîne cinématographique numérique : Projection et visualisation. *English: Colour Characterization of the digital cinema chain,* 2002